# NEW EUROPEAN PATENT SPECIFICATION

(11) **EP 0 885 154 B2**
(45) Date of publication and mention of the opposition decision: **13.04.2005**
(45) Mention of the grant of the patent: 05.01.2000
(21) Application number: 97906874.9
(22) Date of filing: 05.03.1997
(51) Int. Cl.: B65D 83/16, B65D 51/28

(54) **DISPENSING DEVICE FOR THE PREPARATION OF A FOAMY BEVERAGE**
SPENDER FÜR FLUSSIGKEITEN ZUM ZUBEREITEN VON SCHAUMIGEN GETRÄNKEN
DISPOSITIF DISTRIBUTEUR POUR LA PREPARATION D'UNE BOISSON MOUSSEUSE

(30) Priority: 08.03.1996 NL 1002559
(43) Date of publication of application: 23.12.1998
(73) Proprietor: CAMPINA MELKUNIE B.V., NL-5301 LB Zaltbommel (NL)
(72) Inventor: DE BORST, Arie, Leendert, NL-4751 GS Oud Gastel (NL); BOONSTRA, Maarten, Peter, Nicolaas, NL-4706 EK Roosendaal (NL)
(74) Representative: Jorritsma, Ruurd
(86) International application number: PCT/NL1997/000109
(87) International publication number: WO 1997/033813

(56) References cited:
- WO-A-90/08710
- FR-A- 2 453 790
- FR-A- 2 672 038
- US-A- 2 582 262
- US-A- 2 824 010
- US-A- 2 977 231
- US-A- 3 622 354

## Description

The present invention relates to a device for the preparation of cappuccino, by providing a head of foam of coffee whitener on coffee by delivering a coffee whitener as high-velocity jet in the coffee.

In the art, devices for delivery of a high velocity jet of a food concentrate for the preparation of a self-mixed beverage are known from e.g. US-A-2 977 231 and US-A-3 622 354. US-A-3 622 354 describes an aerosol can, the delivery assembly of which comprises an outlet channel having a diameter of more than 3 mm (0.125 inch). By squirting the food concentrate as a high-velocity jet out of the aerosol can into, for example, water or milk, a ready-made, mixed milkshake-like beverage is obtained, it no longer being necessary to stir manually. Using this aerosol can, a food concentrate, such as a cocoa-containing milk concentrate, can be delivered. It is assumed in this document to be known to use a delivery nozzle having an internal diameter of 1.27-2.29 mm (0.05-0.09 inch). According to the teaching of the American patent, this small nozzle diameter is undesirable, since it is easy for it to become blocked, and it is necessary to squirt for longer in order to deliver the desired quantity of food concentrate. As a solution to these problems, the viscosity of the food concentrate to be deliveried is reduced, so that conventional aerosol cans having a conventional internal diameter of about 3.18 mm (0.125 inch) of the delivery nozzle can be used.

According to the invention, it has been surprisingly found that an excellent formation of a head of foam on coffee can be achieved with a device for the preparation of cappuccino by providing a head of foam of a coffee whitener on coffee, by delivering a coffee whitener as a high-velocity jet in the coffee, comprising a container containing the coffee whitener, which container is pressurized or can be pressurized and a delivery assembly with an operating component and an outlet channel having a delivery nozzle, which delivery assembly is designed to connect the outlet channel with the inside of the container, the smallest diameter of the outlet channel and the delivery nozzle being at most 1 mm.

The cappuccino may be hot or cold.

Advantageously, the coffee whitener comprises a dairy concentrate. By means of an appropriate choice of the coffee whitener which is squirted out of the device into coffee a floating layer of foam can be formed on the coffee, the foam substantialy not being mixed with the coffee.

In this patent application, coffee whitener is understood to mean any liquid dairy concentrate derived from milk which is suitable for being added to coffee; this definition thus includes, for example, evaporated milk, condensed milk, thickened milk, inspissated milk and coffee cream. Furthermore, this definition comprises other liquid whiteners, such as for example those of vegetable origin. Most advantageously, the coffee whitener comprises thickened milk.

Preferably, the smallest internal diameter of the outlet channel and the delivery nozzle is 0.3-0.9 mm, and most preferably is 0.5-0.7 mm.

Advantageously. the device according to the invention comprises a propellant.

In contrast to what is taught in US-A-3,622,354, it has been found that the viscosity is not a particularly critical factor in delivering concentrates for the preparation of cappuccino. According to the said American patent, smaller nozzles (1.27 - 2.29 mm) appear to be suitable exclusively for concentrates having a high viscosity and larger nozzles (3.18 mm) for concentrates having a lower viscosity. Preferably, how-ever, the viscosity of the coffee whitener to be delivered using the device according to the present invention is as low as possible.

Highly viscous concentrates adhere to the inside of the container of the device, and devices of this kind cannot easily be emptied. Furthermore, highly viscous concentrates present problems when filling the devices in the factory, for example.

In an advantageous embodiment, the delivery assembly of the device according to the present invention which contains a coffee whitener also comprises an outlet channel having an opening which is of such a size that in use, the coffee whitener can be delivered through the said opening as a low-velocity jet. Using a device of this kind, it is possible to deliver the coffee whitener accommodated therein as a low-velocity or high-velocity jet, as desired. If a low-velocity jet is used, substantially no foam will be formed, but rather the coffee whitener will merely be added to the coffee. One should then stir manually, for example, for the purpose of mixing. By means of this embodiment the same device can be used both for adding coffee whitener to the coffee and for applying a head of foam thereto. Thus, using a device of this kind, coffee, can be provided both with coflee whitener and with a head of foam. As stated above, the delivery assembly of the device according to the present invention may comprise a plurality of outlet channels of different diameters, which can be employed as chosen by the user of the device for delivering the coffee whitener. Thus, these outlet channels can connect the desired outlet channel to the interior of the container using the operating component, for example by rotating or sliding the delivery assembly or components thereof, as a result of which the coffee whitener can be delivered through the selected outlet channel on actuation.

It is also possible to provide the delivery assembly with, for example, a liftable operating component, one outlet channel being used by pressing on one side of the operating component and the other outlet channel on actuation of the other side of the operating component. It is therefore possible, by means of an aerosol can of this kind, by using a combination of both administering jets, thus one at low velocity and one at high velocity, firstly to provide the coffee, with whitener and then with a head of foam.

In a very advantageous embodiment of the present invention, the coffee whitener comprises thickened milk and the smallest diameter of the outlet channel lies between 0.5-0.7 mm. A device of this kind is extremely suitable for producing a head of foam on coffee, as a result of which cappuccino can be prepared.

In accordance with a very advantageous embodiment of the present invention, the delivery assembly of the device is provided with a closure cap, which cap comprises a container for one or more additional ingredients to be delivered. In addition to the coffe whitener, other ingredients are often added to the foamy beverage to be prepared. The provision of a container for delivering these additional ingredients in the closure cap of the device according to the present invention renders a separate container, in the form of, for example, a dredger for additional ingredients of this kind, superfluous, and the additional ingredient in question is immediately available, which provides for considerable ease of use.

The additional ingredients may, for example, serve to change the taste of the foamy beverage, or to decorate it. Preferably, the additional ingredients are selected from the group consisting of sugar, cocoa powder, aniseed powder, chocolate vermicelli, cinnamon, grated chocolate. Thus, the device according to the invention can be used, for example, to squirt thickened milk into coffee, and also to add, for example, sugar from its cap by sprinkling.

If coffee whitener is administered, forming a head of foam, this head of foam can for example be enriched or decorated with aniseed powder or chocolate vermicelli using the cap of the device.

This embodiment is even more advantageous if the additional ingredient in the container in the cap comprises cocoa powder. A device of this kind can be used, with the aid of the device according to the invention, to make cappuccino from an ordinary cup of coffee and to decorate this cappuccino with cocoa powder, as a result of which it is possible to prepare a cappuccino which tastes just like, and has the same appearance as, a real cappuccino of Italian origin

The device according to the invention may be designed as an aerosol can. However, the device may also be designed, for example, as a component of a largef device. In the case of the preparation of cappuccino, consideration may be given to a coffee machine, such as an espresso machine, it being possible directly to provide freshly brewed coffee with a head of foam using the present device according to the invention. Here too, the device according to the invention can form a component of the coffee machine.

The invention furthermore relates to a method according to claim 8. The method can be carried out with the aid of a device described above, such as an aerosol can or, for example, as a component of an espresso machine.

Preferably, thickened milk is used as coffee whitener in the method according to the present invention. By squirting thickened milk at increased pressure as a high-velocity jet into coffee, a foam of the thickened milk is formed on the coffee. Employing the method according to the present invention renders superfluous the production of a milk froth by, for example, whisking manually.

Furthermore, the present invention relates to a method for making cappuccino, which method is characterized in that thickened milk is squirted at increased pressure as a high velocity jet into coffee. Hitherto, fresh cappuccino has been prepared either by heating milk and foaming it manually using a whisk or by blowing hot steam through the milk and then pouring the milk froth formed onto freshly brewed coffee. Using the method according to the present invention, a cappuccino is made which is comparable in terms of quality to that which is made using a method in accordance with the prior art. It should be noted that pulverulent, ready-to-use cappuccino mixes are also available commercially, which mixes should be mixed with hot water to obtain a cappuccino-like beverage. However, the quality of a beverage of this kind does not compare to cappuccino prepared in accordance with the prior art or the invention.

The method is in no way limited to hot coffee; it is also possible to provide a foam on cold coffee, as is illustrated in Example 3 below.

By adding a coffee whitener in the form of a pressurized jet of this kind to coffee, an attractive foam will generally be formed on the coffee.

Advantageously, the jet formed is 0.3-0.9 mm just before being delivered. It has been found that coffee whitener delivered using a pressurized jet formed in this way will lead to a very attractive foam.

Even more advantageously, the jet formed is 0.5-0.7 mm just before being delivered. Coffee whitener delivered under pressure in this manner foams to form an optimally attractive and stable foam on coming into contact with the coffee.

Advantageously, the pressure for squirting the coffee whitener is at least 6 bar. At lower pressure, a cappuccino of lower quality is usually formed.

For a cappuccino which has an optimum quality, in a very attractive embodiment ol the present invention the pressure on delivery of a food concentrate lies in the range from 9-10 bar. The pressure on delivery of the coffee whitener may also be higher than the values given, for example 15 bar, without adversely affecting the formation of foam. At such a higher pressure, however, greater demands are placed on the pressurized container or the delivery assembly, which under certain circumstances may lead to a disproportionate increase in the costs in relation to any additional improvement in the foaming properties.

The invention will be explained in more detail below with reference to the appended drawing, in which:
- Fig. 1: shows a device according to the present invention in use;
- Fig. 2: shows an embodiment of a device according to the present invention, in partial cross-section; and
- Fig. 3: shows a side view of a delivery assembly of a device according to the invention.
- Fig. 4: shows a delivery assembly with a closure cap according to the present invention in partial cross-section.

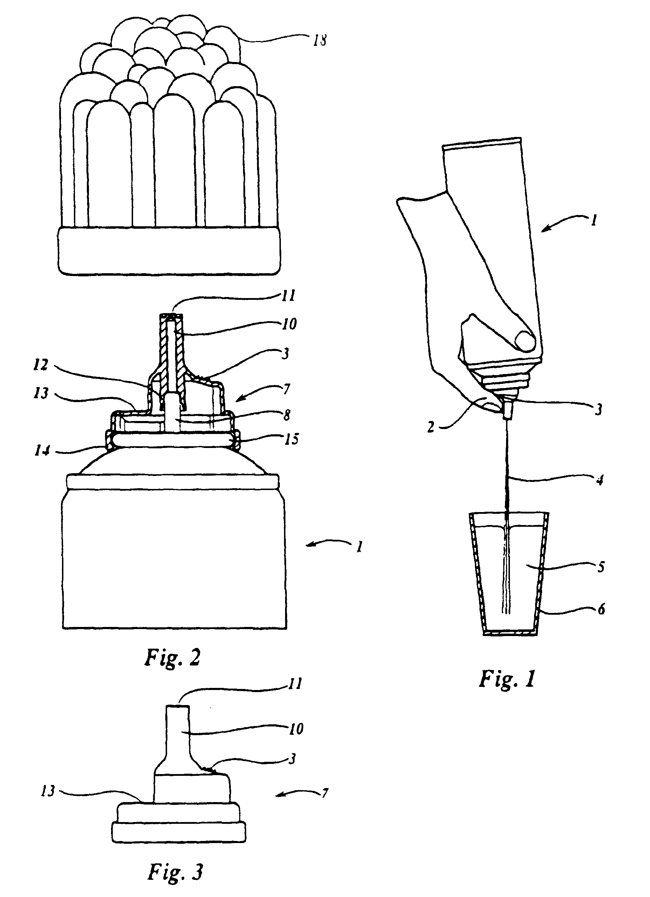

Fig. 1 shows a device according to the present invention in the form of aerosol can 1, which is being held by a hand with a linger 2 an operating component 3. A jet of coffee whitener delivered from aerosol can 1 is indicated by 4, which coffee whitener is directed towards a glass 6 in which coffee whitener 5 is situated. It finger 2 presses on the operating component 3 of the device 1, jet 4 of the coffee whitener is squirted into the coffee. The cappuccino is obtained due to the high velocity of the jet.

Figs. 2 and 3 show the device 1 in accordance with Fig. 1, these figures showing a delivery assembly 7 in cross-section and side view, respectively. Devices usually comprise a discharge channel 8, which also serves as operating component for the shut-off valve of the device. The delivery assembly 7 comprises an operating component 3, by means of which the device 1 can be operated. Furthermore, an outlet channel 10 having a delivery nozzle 11 is present, which delivery nozzle has, in accordance with the invention, an internal diameter of at most 1 mm. The outlet channel 10 is provided with a suitable tapering end 12 which is closely connected to the discharge channel 8 of the device 1. With 13, a plastic hinge is indicated. The delivery assembly 7 is clamped on a beaded edge 15 of the device 1 by means of an inwardly directed collar 14. With 18, a cap is indicated.

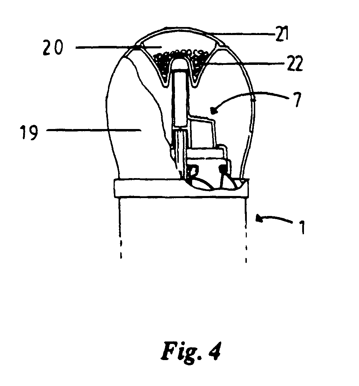

In Fig. 4, the delivery assembly 7 of device 1 is provided with a closure cap 19 which is provided with a container 20 with cover part 21. Additional ingredient 22 is situated in chamber 20. Cover part 21 may be provided with perforations, through which additional ingredient 22 can be delivered. Furthermore, the cover part may comprise an additional closure intended to cover the said perforations.

In the embodiment shown in the figures, the smallest internal diameter ot the outlet channel to the delivery nozzle is present at the location of the delivery nozzle. Although this embodiment is preferred, it is not absolutely necessary. The smallest internal diameter could also be present in the outlet channel 10.

Preferably the outlet channel 10 is as short as possible, in order to avoid any post-expansion of coffee whitener delivered in the said channel.

Allhough a preferred embodiment of the device according to the invention is shown above, it will be clear that the invention is not limited thereto, and that numerous variants of the operating component 3, the outlet channel 10 and the delivery nozzle 11 will be obvious to the person skilled in the art after reading the above description. For example, the delivery assembly 7 may have any desired shape. Means for additionally acting on the coffee whitener to be delivered may also be present in the outlet channel 10, such as for example deflectors which are frequently present in squirters for whipping cream.

The present invention will be explained in more detail on the basis of the following examples.

### Example 1

A cup of hot, freshly brewed coffee was used as the starting liquid for making cappuccino. Using a device according to the present invention, the pressurized container of which contained nitrogen as propellant at a pressure of 10 bar and in which thickened milk was accommodated as coffee whitener, the thickened milk was squirted into the coffee. Almosl immediately after coming into contact with the coffee, the thickened milk formed a layer of foam on the coffee, without the coffee itself being foamed or acquiring an airy character. The smallest diameter of the outlet channel of the aerosol can, and also the diameter of the jet of the thickened milk formed just before delivery, were 0.6 mm.

### Example 2

As Example 1, but coffee which had been cooled to room temperature was used as the starting liquid. A foam having the same properties and quality as in Example 2 was formed.

### Example 3

As Example 1, but coffee which had been cooled to 4°C was used as the starting point. A foam having the same properties and quality as in Examples 2 and 3 was formed.

## Claims

1. Device (1) for the preparation of cappuccino by providing a head of foam of a coffee whitener on coffee, by delivering a coffee whitener as a high-velocity jet (4) in the coffee (5), comprising a container containing the coffee whitener, which container is pressurized or can be pressurized and a delivery assembly (7) with an operating component (3) and an outlet channel (10) having a delivery nozzle (11), which delivery assembly (7) is designed to connect the outlet channel (10) with the inside of the container, the smallest diameter of the outlet channel (10) and the delivery nozzle (11) being at most 1 mm.

2. Device according to claim 1, chateracterized in that the coffee whitener comprises a dairy concentrate, preferably being thickened milk.

3. Device according to claim 1 or 2, **characterized in that** the smallest internal diameter of the outlet channel (10) and the delivery nozzle (11) is 0.3-0.9 mm, preferably 0,5 - 0,7 mm.

4. Device according to one or more of claims 1-3, **characterized in that** the device further comprises a propellant.

5. Device according to one or more of the preceding claims, **characterized in that** the coffee whitener has a relatively low viscosity.

6. Device according to one or more of the preceding claims, **characterized in that** the delivery assembly also comprises an outlet channel having an opening which is of such a size that in use, the coffee whitener can be delivered through the said opening as a low-velocity jet.

7. Device according to one or more of the preceding claims, **characterized in that** the delivery assembly (7) of the device (1) is provided with a closure cap (19), which cap (19) comprises a container (20) for one or more additional ingredients (22) to be delivered, the ingredients preferably selected from the group comprising sugar, cocoa powder, aniseed powder, chocolate vermicelli, cinnamon, grated chocolate, most preferably being cocoa powder.

8. Method for making cappuccino by providing a head of foam of a coffee whitener on coffee, the coffee whitener being squirted as a high-velocity jet into the coffee, the jet formed having a diameter of at most 1 mm, preferably 0,3 - 0,9 mm, more preferably 0,5 - 0,7 mm, just before being delivered.

9. Method according to claim 8, **characterized in that** the pressure for delivery of the coffee whitener is at least 6 bar, preferably at least 9 bar.

10. Method according to claims 8 or 9, **characterized in that** the coffee whitener, comprises thickened milk.

## Patentansprüche

1. Vorrichtung (1) zum Zubereiten von Cappuccino durch Bereitstellen eines Schaumkopfs aus einem Kaffeeweißer auf Kaffee, durch Abgeben eines Kaffeeweißers in Form eines Hochgeschwindigkeitsstrahls (4) in den Kaffee (5), mit einem Behälter, der den Kaffeeweißer enthält, wobei der Behälter unter Druck steht oder unter Druck gesetzt werden kann, und einer Ausgabeeinheit (7) mit einem Bedienelement (3) und einem Auslaßkanal (10) mit einer Abgabedüse (11), wobei die Ausgabeeinheit (7) zum Verbinden des Auslaßkanals (10) mit der Innenseite des Behälters ausgeführt ist, wobei der kleinste Durchmesser des Auslaßkanals (10) und der Abgabedüse (11) höchstens 1 mm beträgt.

2. Vorrichtung nach Anspruch 1, **dadurch gekennzeichnet, daß** der Kaffeeweißer ein Molkereikonzentrat, vorzugsweise verdickte Milch, umfasst.

3. Vorrichtung nach einem der Ansprüche 1 oder 2, **dadurch gekennzeichnet, daß** der kleinste Innendurchmesser des Auslaßkanals (10) und der Ausgabedüse (11) 0,3 bis 0,9 mm, vorzugsweise 0,5 bis 0,7 mm beträgt.

4. Vorrichtung nach einem der vorangehenden Ansprüche 1 bis 3, **dadurch gekennzeichnet, daß** die Vorrichtung ferner ein Treibmittel aufweist.

5. Vorrichtung nach einem der vorangehenden Ansprüche, **dadurch gekennzeichnet, daß** der Kaffeeweißer eine relativ niedrige Viskosität aufweist.

6. Vorrichtung nach einem der vorangehenden Ansprüche, **dadurch gekennzeichnet, daß** die Ausgabeeinheit ferner einen Auslaßkanal mit einer Öffnung derartiger Größe aufweist, daß der Kaffeeweißer bei Gebrauch durch diese Öffnung als ein Niedriggeschwindigkeitsstrahl ausgegeben werden kann.

7. Vorrichtung nach einem der vorhergehenden Ansprüche, **dadurch gekennzeichnet, daß** die Ausgabeeinheit (7) der Vorrichtung (1) mit einer Verschlußkappe (19) versehen ist, wobei die Kappe (19) einen Behälter (20) für eine oder mehrere zusätzlich auszugebende Zutaten (22) aufweist, wobei die Zutaten vorzugsweise aus der Gruppe mit Zucker, Kakaopulver, Anispulver, Schokolade-Vermicelli, Zimt, geraspelter Schokolade ausgewählt sind, wobei Kakaopulver am meisten bevorzugt ist.

8. Verfahren zum Herstellen von Cappuccino durch Bereitstellen eines Schaumkopfs aus Kaffeeweißer auf Kaffee, wobei der Kaffeeweißer als Hochgeschwindigkeitsstrahl in den Kaffee gespritzt wird, wobei der ausgebildete Strahl unmittelbar vor der Abgabe einen Durchmesser von höchstens 1 mm, vorzugsweise 0,3 bis 0,9 mm, und insbesondere 0,5 bis 0,7 mm aufweist.

9. Verfahren nach Anspruch 8, **dadurch gekennzeichnet, daß** der Druck bei der Ausgabe des Kaffeeweißers mindestens 6 bar, vorzugsweise mindestens 9 bar beträgt.

10. Verfahren nach einem der Ansprüche 8 oder 9, **dadurch gekennzeichnet, daß** der Kaffeeweißer verdickte Milch umfasst.

## Revendications

1. Dispositif (1) pour la préparation de cappuccino par production d'un chapeau de mousse d'une substance destinée à éclaircir le café sur le café, en distribuant une substance destinée à éclaircir le café sous forme d'un jet à grande vitesse (4) dans le café (5), comprenant un récipient contenant la substance destinée à éclaircir le café, ledit récipient étant sous pression ou pouvant être pressurisé, et un ensemble distributeur (7) avec un élément d'actionnement (3), et un canal de sortie (10) ayant -une buse de distribution (11), lequel ensemble distributeur (7) est conçu pour raccorder le canal de sortie (10) à l'intérieur du récipient, le diamètre le plus petit du canal de sortie (10) et de la buse de distribution (11) étant de 1 mm au plus.

2. Dispositif selon la revendication 1, **caractérisé en ce que** la substance destinée à éclaircir le café comprend un concentré laitier, de préférence du lait épaissi.

3. Dispositif selon la revendication 1 ou 2, **caractérisé en ce que** le diamètre interne le plus petit du canal de sortie (10) et de la buse de distribution (11) est compris entre 0,3 et 0,9 mm, de préférence entre 0,5 et 0,7 mm.

4. Dispositif selon une ou plusieurs des revendications 1-3, **caractérisé en ce que** le dispositif comprend en outre un gaz propulseur.

5. Dispositif selon une ou plusieurs des revendications précédentes, **caractérisé en ce que** la substance destinée à éclaircir le café présente une viscosité relativement faible.

6. Dispositif selon une ou plusieurs des revendications précédentes, **caractérisé en ce que** l'ensemble distributeur comporte également un canal de sortie ayant une ouverture qui présente une dimension telle, qu'en cours d'utilisation, la substance destinée à éclaircir le café puisse être distribuée à travers ladite ouverture sous forme d'un jet à basse vitesse.

7. Dispositif selon une ou plusieurs des revendications précédentes, **caractérisé en ce que** l'ensemble distributeur (7) du dispositif (1) est pourvu d'un bouchon de fermeture (19), lequel bouchon (19) comporte un récipient (20) pour un ou plusieurs ingrédient(s) supplémentaire(s) (22) à distribuer, les ingrédients étant de préférence sélectionnés parmi le groupe composé de sucre, de poudre de cacao, de poudre anisée, de vermicelles au chocolat, de cannelle, de chocolat râpé, parmi lesquels. on préfère idéalement la poudre de cacao.

8. Procédé de fabrication de cappuccino dans lequel on produit un chapeau de mousse d'une substance destinée à éclaircir le café sur le café, en faisant gicler la substance destinée à éclaircir le café sous forme d'un jet à grande vitesse dans le café, le jet formé présentant un diamètre de 1 mm au plus, de préférence compris entre 0,3 et 0,9 mm, de façon plus préférentielle entre 0,5 et 0,7 mm, juste avant distribution.

9. Procédé selon la revendication 8, **caractérisé en ce que** la pression de distribution de la substance destinée à éclaircir le café est d'au moins 6 bars, de préférence d'au moins 9 bars.

10. Procédé selon la revendication 8 ou 9, **caractérisé en ce que** la substance destinée à éclaircir le café comprend du lait épaissi.
